# EUROPEAN PATENT APPLICATION

(11) **EP 3 115 101 A1**
(43) Date of publication of application: **11.01.2017**
(21) Application number: 15757696.8
(22) Date of filing: 06.03.2015
(51) Int. Cl.: B01D 69/06, B01D 69/12, B01D 71/36, H01M 2/12, H05K 5/06, H01G 9/12, H01G 11/78

(54) **GAS-PERMEABLE MEMBER AND BREATHABLE CONTAINER**

(30) Priority: 06.03.2014 JP 2014044287
(71) Applicant: Nitto Denko Corporation, Ibaraki-shi, Osaka 567-8680 (JP)
(72) Inventor: ISHII, Kyouko, Ibaraki-shi Osaka 567-8680 (JP); YANO, Yozou, Ibaraki-shi Osaka 567-8680 (JP); FURUUCHI, Kouji, Ibaraki-shi Osaka 567-8680 (JP); FUKUOKA, Takahiro, Ibaraki-shi Osaka 567-8680 (JP); KIRA, Yoshiko, Ibaraki-shi Osaka 567-8680 (JP)
(74) Representative: Müller-Boré & Partner Patentanwälte PartG mbB
(86) International application number: PCT/JP2015/056699
(87) International publication number: WO 2015/133617

(57) **Abstract**

A gas permeable member includes: a gas permeable sheet configured to allow a gas to permeate therethrough; a holder including a gas flow hole that allows the gas to circulate therethrough and configured to hold the gas permeable sheet inside the gas flow hole; a cover mounted on the holder so as to cover an opening of the gas flow hole on a side on which the gas is discharged; and a gas discharge path formed between the cover and the holder and configured to discharge the gas discharged from the gas flow hole between the cover and the holder.

## Description

### CROSS-REFERENCE TO RELATED APPLICATION

This application claims priority to Japanese Patent Application No. 2014-044287, the disclosure of which is incorporated herein by reference in its entirety.

### FIELD

The present invention relates to a gas permeable member that allows a gas to permeate therethrough, particularly, to a gas permeable member including a gas permeable sheet that allows a gas to permeate therethrough. Further, the present invention relates to a gas permeable container including the gas permeable member.

### BACKGROUND

When gases are generated within a sealed container, the internal pressure of the container increases, which may possibly result in damage or explosion of the container. For example, in electric storage devices such as secondary batteries, electrolytic capacitors, and electric double layer capacitors, a specific gas is generated during use within a container in which an electrode is housed, and therefore an increase in internal pressure may possibly cause damage or explosion of the container if the gas is not discharged to the outside of the container. Therefore, various structures to discharge the gas within the container to the outside of the container have been proposed.

For example, as a container constituting an electric storage device, a container configured to house an electrode and an electrolyte, the container including a gas permeable part through which a gas permeates, thereby enabling gas circulation from inside to outside via the gas permeable part (hereinafter, referred to as a gas permeable container) has been proposed. In such a gas permeable container, the gas permeable part is formed by mounting a gas permeable sheet through which the gas permeates on a through hole formed in a container body housing the electrode and the electrolyte so as to cover the through hole. Thus, the gas generated inside the gas permeable container is configured to permeate through the gas permeable part (specifically, the gas permeable sheet), so as to be discharged to the outside of the gas permeable container (see Patent Literature 1).

Further, another gas permeable container that is constituted by mounting a gas permeable member configured to allow a gas to permeate therethrough on a through hole of such a container body as described above has been proposed. The gas permeable member is constituted by a gas permeable sheet and a holder configured to hold the gas permeable sheet. In the holder, a gas flow hole that allows the gas to circulate therethrough is formed, and a gas permeable sheet is held to intersect the gas flow hole. The gas permeable member is mounted on the through hole of the container body, so that the gas generated inside the gas permeable container is discharged to the outside of the container by passing through the gas flow hole and permeating through the gas permeable sheet.

As such a gas permeable sheet as described above, a porous film made of polytetrafluoroethylene (PTFE) or the like, a foil strip made of metal (e.g., nickel, palladium-silver, and platinum), or a foil strip obtained by vapor deposition of platinum on a PTFE film, for example, is proposed (see Patent Literatures 1 and 2).

However, with the above-described configuration, the region that allows a gas to permeate therethrough in the gas permeable sheet is exposed outside the container body, and therefore dirt may possibly deposit on the gas permeable sheet from the outside, or an external object may possibly contact with the gas permeable sheet. In such a case, the gas permeable sheet is contaminated, which may cause a significant decrease in permeability or damage to the gas permeable sheet to allow incorporation of foreign matter into the container body.

### CITATION LIST

### Patent Literature

Patent Literature 1: WO 2009/001947 A
Patent Literature 2: JP 4280014 B2

### SUMMARY

### Technical Problem

It is therefore an object of the present invention to provide a gas permeable member that can prevent contamination of the gas permeable sheet from the outside, or damage to the gas permeable sheet due to the contact with an external object. Further, it is another object thereof to provide a container using the gas permeable member.

### Solution to Problem

A gas permeable member according to the present invention includes: a gas permeable sheet configured to allow a gas to permeate therethrough; a holder including a gas flow hole that allows the gas to circulate therethrough and configured to hold the gas permeable sheet inside the gas flow hole; a cover mounted on the holder so as to cover an opening of the gas flow hole on a side on which the gas is discharged; and a gas discharge path formed between the cover and the holder and configured to discharge the gas discharged from the gas flow hole between the cover and the holder.

It is preferable that the cover include a cover body formed so as to cover the opening of the gas flow hole on the side on which the gas is discharged, and the cover body be arranged at a position away from the gas permeable sheet so that a space is formed between the cover body and the gas permeable sheet when the cover is mounted on the holder.

It is preferable that the cover further include a cover extending part extending from the cover body toward the holder side, and the cover extending part be formed along the outer circumferential direction of the cover body so as to house an end of the holder having the opening on the side on which the gas is discharged within the space surrounded by the cover extending part.

A gas permeable container according to the present invention includes: the gas permeable member having any one of the above-described features; and a container body on which the gas permeable member is mounted, wherein the gas is allowed to flow between a space inside the container body and a space outside the container body via the gas permeable member.

### BRIEF DESCRIPTION OF DRAWINGS

Fig. 1 is a perspective sectional view showing members constituting a gas permeable member according to an embodiment of the present invention.
Fig. 2 is a perspective sectional view showing the gas permeable member according to the embodiment.
Fig. 3 is a perspective sectional view showing a gas permeable container including the gas permeable member according to the embodiment.
Fig. 4 is a perspective sectional view showing a gas permeable member according to another embodiment.
Fig. 5 is a perspective sectional view showing a gas permeable member according to still another embodiment.

### DESCRIPTION OF EMBODIMENTS

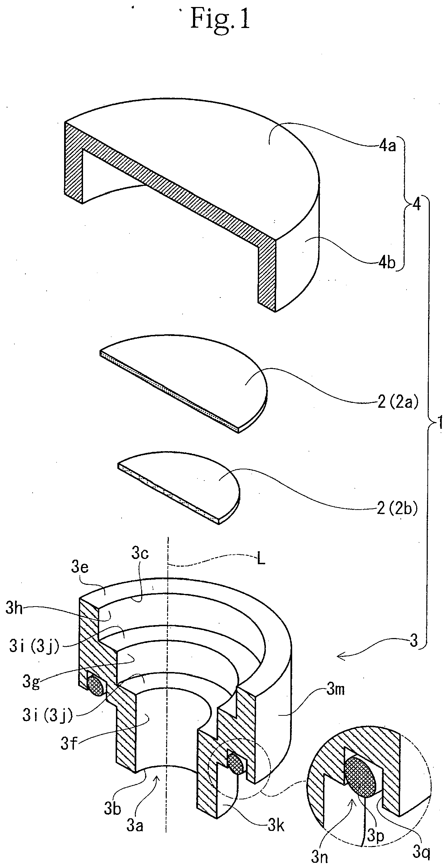

Hereinafter, an embodiment of the present invention is described with reference to Figs. 1 to 3. In the following drawings, the same or corresponding portions are denoted by the same reference numerals, and the description thereof is not repeated.

As shown in Fig. 1, a gas permeable member 1 according to this embodiment includes gas permeable sheets 2 configured to allow a gas to permeate therethrough and a holder 3 configured to hold the gas permeable sheets 2. The holder 3 includes a gas flow hole 3a that allows the gas to circulate therethrough in one direction, and openings 3b and 3c are formed at both ends of the gas flow hole 3a. The holder 3 is configured so that a gas flowing therein through an opening (hereinafter, referred to also as inlet) 3b formed on one end side of the gas flow hole 3a can be discharged through an opening (hereinafter, referred to also as outlet) 3c formed on the other end side. Further, the gas permeable member 1 further includes a cover 4 that is mounted on the holder 3 so as to cover the outlet 3c of the gas flow hole 3a.

As the gas permeable sheets 2, a selective permeable sheet 2a that allows a specific gas to selectively permeate therethrough and a non-selective permeable sheet 2b without such selectivity for a specific gas are used. In this embodiment, a plurality (specifically 2 pieces) of the gas permeable sheets 2 are used, in which one is the selective permeable sheet 2a, and the other is the non-selective permeable sheets 2b.

The selective permeable sheet 2a is configured to be selectively permeable to a specific gas from one surface side to the other surface side. The gas to which the selective permeable sheet 2a is permeable is not specifically limited, and examples thereof include gases such as hydrogen, carbon dioxide, and oxygen.

As the selective permeable sheet 2a having selectivity for hydrogen gas, the selective permeable sheet 2a constituted by a sheet material containing a resin such as aromatic polyimide or a sheet material containing layers of hydrogen-permeable metals (such as vanadium, vanadium alloy, palladium alloy, niobium, and niobium alloy) can be mentioned, for example. Examples of the sheet material containing hydrogen-permeable metal layers include a sheet material (metal foil) composed only of a hydrogen-permeable metal layer and a sheet material formed by vapor deposition of a metal layer on a substrate layer such as a resin sheet. Examples of the selective permeable sheet 2a that allows carbon dioxide to selectively permeate therethrough include the selective permeable sheet 2a constituted by a sheet material made of silicone rubber, a PVA crosslinked sheet material, and a PEG crosslinked sheet material.

The non-selective permeable sheet 2b is arranged on at least one surface side of the selective permeable sheet 2a (each of both sides in this embodiment) to overlap the selective permeable sheet 2a. The non-selective permeable sheet 2b can be appropriately selected depending on the properties, etc., of the selective permeable sheet 2a to be laminated, but examples thereof include the non-selective permeable sheet 2b composed of a sheet material such as a porous film made of polytetrafluoroethylene (PTFE), ceramic, metal, resin, or the like. In particular, a porous film made of PTFE is preferable as a sheet material constituting the non-selective permeable sheet 2b because of its high water repellency, high heat resistance, and high chemical resistance.

The holder 3 includes the gas flow hole 3a that allows the gas to circulate therethrough in one direction, and the inlet 3b and the outlet 3c are formed at both ends of the gas flow hole 3a. That is, the holder 3 includes a flow path that allows the gas to circulate therethrough from the inlet 3b side to the outlet 3c side of the gas flow hole 3a, within the gas flow hole 3a. Thus, the holder 3 is configured so that the gas flowing into the gas flow hole 3a through one end 3d having the inlet 3b of the gas flow hole 3a can be discharged through the other end 3e having the outlet 3c of the gas flow hole 3a. In this embodiment, the the holder 3 is formed into a cylindrical shape (specifically, cylindrical shape about the axis L), and the gas flow hole 3a is formed at the center.

The axis L is an imaginary line passing through the centers of the opening 3b and 3c formed at both ends of the gas flow hole 3a. Further, in the following description, a direction that intersects the axis L and moves away from the axis L is referred to as "outward", and a direction that intersects the axis L and moves from a position away from the axis L toward the axis L is referred to as "inward".

The gas flow hole 3a is formed so that its sectional shape orthogonal to the axis L stepwisely and/or continuously (in this embodiment, stepwisely) increases from one end side (the inlet 3b side) toward the other end side (the outlet 3c side) along the axis L. Specifically, the gas flow hole 3a includes a first wall 3f that is formed most on the one end side, a second wall 3g that is formed more on the other end side than the first wall 3f and has a larger sectional shape than the first wall 3f, and a third wall 3h that is formed more on the other end side than the second wall 3g and has a larger sectional shape than the second wall 3g. The walls 3f, 3g, and 3h are formed along the axis L. Further, sheet mounting parts 3i (specifically, internal mounting parts 3j), which will be described below, are formed between the walls 3f, 3g, and 3h.

Further, the holder 3 includes a plurality of sheet mounting parts 3i on which the gas permeable sheets 2 (specifically, the selective permeable sheet 2a and the non-selective permeable sheet 2b) are mounted. The sheet mounting parts 3i are formed into an annular shape so as to intersect the walls 3f, 3g, and 3h (that is, along the direction intersecting the axis L). In this embodiment, the holder 3 includes a plurality of sheet mounting parts 3i (hereinafter, referred to also as internal mounting parts 3j) configured so that the gas permeable sheets 2 can be mounted inside the gas flow hole 3a.

In this embodiment, the holder 3 includes two internal mounting parts 3j. One of the internal mounting parts 3j is formed between the first wall 3f and the second wall 3g of the gas flow hole 3a, and is formed by the region expanding outwardly (or inwardly) from the first wall 3f(or the second wall 3g). More specifically, the one of the internal mounting parts 3j is formed along the direction intersecting the axis L (into a planar shape) so as to connect an end on the second wall 3g side of the first wall 3f and an end on the first wall 3f side of the second wall 3g to each other. Further, the other of the internal mounting parts 3j is formed between the second wall 3g and the third wall 3h of the gas flow hole 3a, and is formed by the region expanding outwardly (or inwardly) from the second wall 3g (or the third wall 3h). More specifically, the other of the internal mounting parts 3j is formed along the direction intersecting the axis L (into a planar shape) so as to connect an end on the third wall 3h side of the second wall 3g and an end on the second wall 3g side of the third wall 3h to each other.

Further, the holder 3 is formed so that its cross section orthogonal to the axis L has an outer circumferential shape that stepwisely and/or continuously (in this embodiment, stepwisely) increase along the axis L from the one end 3d side toward the other end 3e side. Thus, in the holder 3, a region (hereinafter, referred to also as small outline part) 3k with a cross section having a small outer circumferential shape on the one end 3d side and a region (hereinafter, referred to also as large outline part) 3m with a cross section having a large outer circumferential shape on the other end side are formed, and a step is formed between the small outline part 3k and the large outline part 3m.

Further, the holder 3 includes a sealing material 3p for ensuring the air tightness between the holder 3 and a container body A, which will be described below, and a sealing material container 3q configured to house the sealing material 3p, at an end 3n (specifically, an end located outwardly of the outer circumferential surface of the small outline part 3k) on the small outline part 3k side of the large outline part 3m. In this embodiment, the sealing material 3p has an annular shape (so-called o-ring), and is arranged so that the small outline part 3k is located thereinside. The material constituting the sealing material 3p is not specifically limited, but it is preferable to have flexibility and elasticity so as to be in close contact with a container cover C, which will be described below, when it contacts with the container cover C, and rubber materials such as silicone rubber and ethylene-propylene-diene rubber (EPDM) are preferably used. Meanwhile, the sealing material container 3q has a recessed shape so as to be open on the container body A side, and is configured so that a part of the sealing material 3p projects from the sealing material container 3q when the sealing material 3p is housed thereinside. Further, the sealing material container 3q is configured so that a gap is formed between the sealing material container 3q and the housed sealing material 3p.

The cover 4 is constituted by a cover body 4a formed so as to cover the outlet 3c of the gas flow hole 3a, and a cover extending part 4b formed to extend from the cover body 4a toward the holder 3 side. In this embodiment, the cover body 4a is formed to have a plate (disk) shape with an outer circumferential shape being larger than the outlet 3c. Meanwhile, the cover extending part 4b is continuously formed throughout the entire cover body 4a in the outer circumferential direction. Further, the cover extending part 4b is formed to extend from the circumferential edge of the cover body 4a and is configured so that the other end (end including the outlet 3c) 3e of the holder 3 can be housed in a space that is surrounded by the cover extending part 4b.

The materials constituting the holder 3 and the cover 4 as described above are not specifically limited, and examples thereof include thermoplastic resins such as polybutylene terephthalate (PBT), acrylonitrile butadiene styrene resin (ABS resin), and thermoplastic elastomer. Use of thermoplastic resins is preferable because of ease of molding.

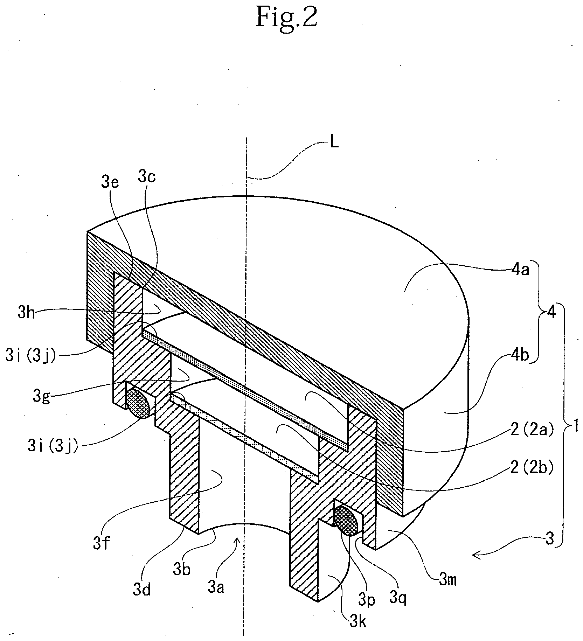

The gas permeable member 1 as shown in Fig. 2 is formed by mounting the gas permeable sheets 2 (specifically, the selective permeable sheet 2a and the non-selective permeable sheet 2b) and the cover 4, which are configured as above, on the holder 3. As a process for forming the gas permeable member 1, one of the gas permeable sheets 2 (specifically, the non-selective permeable sheet 2b) is first placed on one of the sheet mounting parts 3i (specifically, one of the internal mounting parts 3j) located most on the one end 3d side (the inlet 3b side of the gas flow hole 3a) of the holder 3. At this time, the circumferential edge of the one of the gas permeable sheets 2 (specifically, the non-selective permeable sheet 2b) contacts with the one of the sheet mounting parts 3i (specifically, the one of the internal mounting parts 3j). Then, the non-selective permeable sheet 2b is mounted on the one of the internal mounting parts 3j by adhesion (specifically, adhesion using a double-sided adhesive tape or heat sealing) of the circumferential edge of the non-selective permeable sheet 2b to the one of the internal mounting parts 3j.

Next, the other of the gas permeable sheets 2 (specifically, the selective permeable sheet 2a) is placed on the other of the sheet mounting parts 3i (specifically, the other of the internal mounting parts 3j) located more on the other end 3e side (the outlet 3c side of the gas flow hole 3a) of the holder 3 than the sheet mounting parts 3i (specifically, the one of the internal mounting parts 3j) on which the non-selective permeable sheet 2b is mounted. At this time, the circumferential edge of the other of the gas permeable sheets 2 (specifically, the selective permeable sheet 2a) contacts with the other of the sheet mounting parts 3i (specifically, the other of the internal mounting parts 3j). Then, the selective permeable sheet 2a is mounted on the other of the internal mounting parts 3j by adhesion (specifically, adhesion using a double-sided adhesive tape or heat sealing) of the circumferential edge of the non-selective permeable sheet 2b to the other of the internal mounting parts 3j.

The gas permeable sheets 2 (specifically, the selective permeable sheet 2a and the non-selective permeable sheet 2b) are arranged to intersect the gas flow path in the gas flow hole 3a by being mounted on the holder 3 as described above. Further, the gas permeable sheets 2 are arranged to overlap each other at an interval, and a space is formed between the gas permeable sheets 2. Then, the non-selective permeable sheet 2b is arranged on one surface side of the selective permeable sheet 2a, thereby preventing contamination of the selective permeable sheet 2a from the one surface side (specifically, from the inner side of the container body A, which will be described below). That is, the non-selective permeable sheet 2b functions as a protective sheet to protect the selective permeable sheet 2a from contamination or damage.

Finally, the cover 4 is mounted on the other end 3e of the holder 3. Thus, the other end 3e of the holder 3 is housed within the space surrounded by the cover extending part 4b, and the outlet 3c is covered by the cover 4 (specifically, the cover body 4a). At this time, the other end 3e of the holder 3 (the outlet 3c) abuts one surface of the cover body 4a. Further, the tip of the cover extending part 4b (end located in the extending direction) is located more on the one end 3d side than the other end 3e of the holder 3.

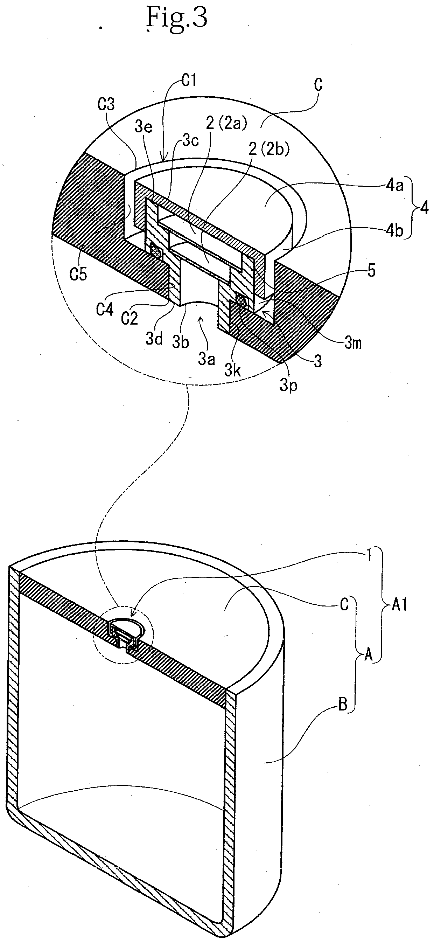

As shown in Fig. 3, the gas permeable member 1 formed as described above constitutes a gas permeable container A1 by being mounted on the container body A including an internal space configured to house other members. The container body A is constituted by a body B including the internal space configured to house the other members, and the container cover C configured to close an opening of the body B, and is configured so that the gas permeable member 1 can be mounted on the container cover C.

The container cover C includes a through hole C1 passing through the container cover C in the thickness direction, where an opening C2 is formed on one end side of the through hole C1 so as to face the internal space of the body B, and an opening C3 is formed on the other end side thereof so as to face the external space of the container body A. The gas permeable member 1 is mounted on the container body A (specifically, the container cover C) by being inserted into the through hole C1.

Further, the through hole C1 is constituted by a small outline part insertion part C4 into which the small outline part 3k of the holder 3 is inserted, and a large outline part insertion part C5 into which the large outline part 3m of the holder 3 and the cover 4 are inserted. The small outline part insertion part C4 is formed on one end side of the through hole C1 and is configured so that its sectional shape orthogonal to the thickness direction of the container cover C is smaller than that on the other end side of the through hole C1. Meanwhile, the large outline part insertion part C5 is formed on the other end side of the through hole C1, and is configured so that its sectional shape orthogonal to the thickness direction of the container cover C is larger than that on one end side of the through hole C1. This allows a step to be formed between the small outline part insertion part C4 and the large outline part insertion part C5. That is, the through hole C1 is formed so that its sectional shape orthogonal to the thickness direction of the container cover C stepwisely increases from the one end side (the opening C2 side) to the other end side (the opening C3 side).

Then, the gas permeable member 1 is inserted into the through hole C1, thereby closing the through hole C1. At this time, the small outline part 3k of the holder 3 is inserted into the small outline part insertion part C4 of the through hole C1, thereby allowing the small outline part 3k to be fitted into the small outline part insertion part C4, so that the gas permeable member 1 is fixed to the container cover C. Further, the end 3n on the small outline part 3k side of the large outline part 3m of the holder 3 (specifically, the end located outwardly of the outer circumferential surface of the small outline part 3k) abuts the step formed between the small outline part insertion part C4 and the large outline part insertion part C5 in the through hole C1. This prevents the gas permeable member 1 from falling inside the container body A. At this time, the sealing material (specifically, o-ring) 3p closely contacts with the step formed between the small outline part insertion part C4 and the large outline part insertion part C5 in the through hole C1 (specifically, the gas permeable member 1 is pressed toward the container body A side and the sealing material 3p is compressed), thereby ensuring the air tightness between the gas permeable member 1 and the container cover C. Meanwhile, the large outline part 3m of the holder 3 and the cover 4 are inserted into the large outline part insertion part C5 of the through hole C1, thereby forming a space (specifically, an annular gap) between the cover 4 and the large outline part insertion part C5.

As described above, the gas permeable member 1 is mounted on the container body A (specifically, the container cover C), thereby allowing a gas generated inside the gas permeable container A1 (specifically, the container body A) to be discharged to the outside through the gas permeable member 1. Specifically, a gas is generated inside the container body A, thereby causing an increase in internal pressure of the container body A. Following this, the gas inside the container body A flows into the gas flow hole 3a through the inlet 3b. Then, the gas that has flowed into the gas flow hole 3a permeates through the gas permeable sheets 2 when it circulates within the gas flow hole 3a toward the outlet 3c side. Then, the gas that has permeated through the gas permeable sheets 2 is discharged through the outlet 3c of the gas flow hole 3a. The gas that has been discharged through the outlet 3c is discharged to the outside of the gas permeable container A1 (space formed between the container body A and the gas permeable member 1), passing between the holder 3 and the cover 4. That is, a gap (gas discharge path) 5 through which the gas can permeate is formed between the holder 3 and the cover 4. This reduces the internal pressure of the container body A.

The gas permeable container A1 as described above may be used for housing an electrode or the like, for example, as a member constituting an electric storage device such as a secondary battery, an electrolytic capacitor (aluminum electrolytic capacitor, etc.), and an electric double layer capacitor, in some cases. In such a case, various gases are generated inside the gas permeable container A1. For example, in the case where the gas permeable container A1 is used as a container constituting an aluminum electrolytic capacitor, hydrogen gas is generated. In the case where it is used as a container constituting an electric double layer capacitor, carbon dioxide gas is generated. Therefore, discharging only a specific gas to the outside of the gas permeable container A1 is enabled by selecting a material constituting the selective permeable sheet 2a corresponding to the type of gas generated within the gas permeable container A1.

The above-described gas permeable member 1 includes: the gas permeable sheets 2 configured to allow a gas to permeate therethrough, the holder 3 including the gas flow hole 3a that allows the gas to circulate therethrough and configured to hold the gas permeable sheets 2 inside the gas flow hole 3a; the cover 4 mounted on the holder 3 so as to cover the opening 3c of the gas flow hole 3a on a side on which the gas is discharged; and the gas discharge path 5 formed between the cover 4 and the holder 3 and configured to discharge the gas from the inside to the outside of the gas flow hole 3a.

As described above, the gas permeable member and the gas permeable container according to the present invention can prevent contamination of the gas permeable sheets from the outside or damage thereto due to contact with an external object.

That is, the gas permeable member 1 prevents the entry of foreign matter into the gas flow hole 3a through the outlet 3c by the cover 4 being mounted on the holder 3 so as to cover the outlet 3c of the gas flow hole 3a. This can prevent contamination of the gas permeable sheets 2 held inside the gas flow hole 3a due to foreign matter entering the gas flow hole 3a from the outside.

Further, the gas discharge path 5 is formed between the cover 4 and the holder 3, so that the gas discharged through the outlet 3c of the gas flow hole 3a is discharged through the gas discharge path 5. Therefore, the gas can circulate through the gas flow hole 3a and the gas discharge path 5.

Further, a space is formed between the cover body 4a and one of the gas permeable sheet 2, so that the space between the cover body 4a and the gas permeable sheet 2 acts as a buffer even when the atmospheric pressure on the inlet 3b side of the gas flow hole 3a drastically increases. This can prevent separation of the cover 4 from the holder 3 due to the cover 4 being biased by the atmospheric pressure.

Further, the other end 3e side of the holder 3 is housed in the space surrounded by the cover extending part 4b, so that separation of the cover 4 from the holder 3 can be prevented. Specifically, even if the cover body 4a is biased by the pressure of the gas discharged through the outlet 3c of the gas flow hole 3a in the direction of being separated from the holder 3 and is displaced, the cover 4 is not separated from the holder 3 as long as the other end 3e of the holder 3 is located within the space surrounded by the cover extending part 4b (as long as the displacement does not reach the outside of the space surrounded by the cover extending part 4b). Thus, the mounted state of the cover 4 on the holder 3 can be maintained.

Further, even in the case where the atmospheric pressure within the container body A has increased, the gas inside the container body A is discharged to the outside of the container body A via the gas flow hole 3a and the gas discharge path 5 of the gas permeable member 1. This reduces the internal pressure of the container body A, and thus can prevent deformation or damage of the container body A due to the increase in internal pressure.

The gas permeable member and the gas permeable container according to the present invention are not limited to the above-described embodiments, and various modifications can be made without departing from the gist of the present invention. Further, the above-described configurations, methods, or the like, of the plurality of embodiments may be optionally employed and combined (a configuration, method, or the like, according to one embodiment may be applied to a configuration, method, or the like, according to another embodiment), and it is a matter of course that configurations, methods, or the like according to various modifications described below may be optionally selected to be employed for the configurations, methods, or the like, according to the above-described embodiments.

For example, in the above-described embodiments, the selective permeable sheet 2a and the non-selective permeable sheet 2b are respectively mounted on the two internal mounting parts 3j, but there is no limitation to this. The non-selective permeable sheet 2b may be mounted on the one end 3d of the holder 3 so as to cover the inlet 3b of the gas flow hole 3a, instead of being mounted on one of the internal mounting parts 3j. Further, the non-selective permeable sheet 2b may be further mounted on the other end 3e of the holder 3 so as to cover the outlet 3c of the gas flow hole 3a.

Further, in the aforementioned embodiments, the selective permeable sheet 2a and the non-selective permeable sheet 2b are used as the gas permeable sheets 2, but there is no limitation to this. For example, one or a plurality of only either the selective permeable sheet 2a or the non-selective permeable sheet 2b may be used as the gas permeable sheets 2.

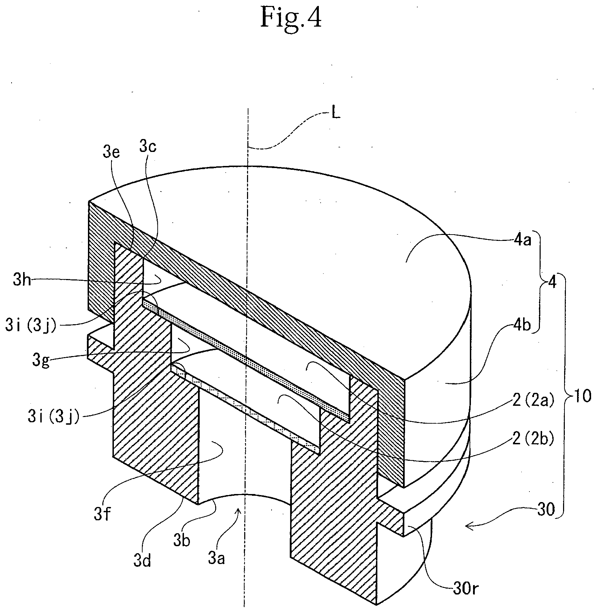

Further, in the above-described embodiments, the holder 3 is configured to include the small outline part 3k and the large outline part 3m, but there is no limitation to this. For example, as shown in Fig. 4, a holder 30 configured so that its cross section orthogonal to the axis L has an outer circumferential shape that does not change along the axis L may be employed. In a gas permeable member 10 including the holder 30 as described above, a flange 30r is provided on the outer circumferential surface of the holder 30, thereby allowing a step to be formed between a region on one end side (the opening 3b side) of the holder 30 and the flange 30r. Then, the flange 30r abuts the step formed between the small outline part insertion part C4 and the large outline part insertion part C5 in the through hole C1 of the container cover C, thereby preventing the gas permeable member 10 from falling inside the container body A.

Further, in the above-described embodiments, the gas permeable sheets 2 are configured to be mounted on the holder 3, but there is no limitation to this. For example, the holder 3 may be integrally formed with the gas permeable sheets 2 in plastic molding of the holder 3.

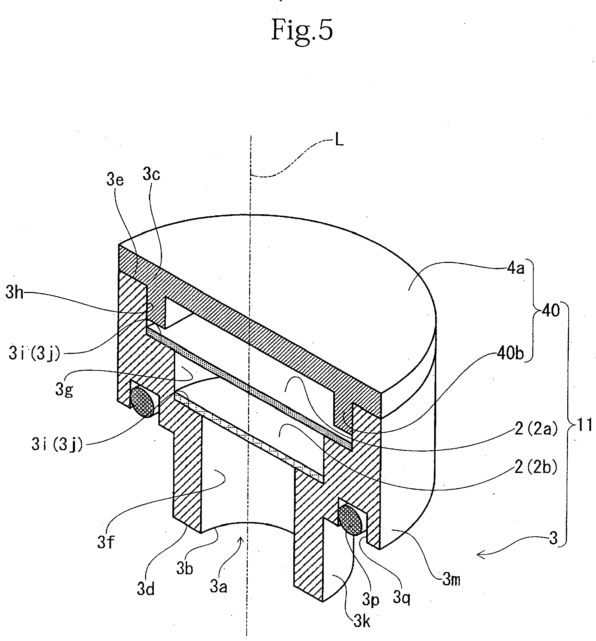

Further, in the above-described embodiments, the cover 4 is constituted by forming the cover extending part 4b to extend from the outer circumferential edge of the cover body 4a, but there is no limitation to this. For example, as shown in Fig. 5, a cover 40 may be constituted by forming a cover extending part 40b to extend from a region inside the outer circumferential edge of the cover body 4a. In a gas permeable member 11 including the cover 40 as described above, the cover extending part 40b is configured to be inserted inside the gas flow hole 3a, so that separation of the cover 40 from the holder 3 can be prevented.

Further, in the above-described embodiments, while the gas permeable member 1 is inserted into the through hole C1 of the container cover C, a space is formed between the gas permeable member 1 (specifically, the cover 4) and the container cover C (specifically, the through hole C1), but there is no limitation to this. For example, the cover 4 may be configured to contact with the through hole C1, as long as the gas can circulate between the cover 4 and the through hole C 1.

### REFERENCE SIGNS LIST

- 1, 10, 11:: Gas permeable member
- 2:: Gas permeable sheet
- 2a:: Selective permeable sheet
- 2b:: Non-selective permeable sheet
- 3, 30:: Holder
- 3a:: Gas flow hole
- 3b:: Inlet
- 3c:: Outlet
- 3f:: First wall
- 3g:: Second wall
- 3h:: Third wall
- 31:: Sheet mounting part
- 3j:: Internal mounting part
- 3k:: Small outline part
- 3m:: Large outline part
- 3p:: Sealing material
- 3q:: Sealing material container
- 4, 40:: Cover
- 4a:: Cover body
- 4b, 40b:: Cover extending part
- 30r:: Flange
- 5:: Discharge path
- A1:: Gas permeable container
- A:: Container body
- B:: Body
- C:: Container cover
- C1: Through hole
- C4:: Small outline part insertion part
- C5:: Large outline part insertion part
- L:: Axis

## Claims

1. A gas permeable member comprising:
a gas permeable sheet configured to allow a gas to permeate therethrough;
a holder including a gas flow hole that allows the gas to circulate therethrough and configured to hold the gas permeable sheet inside the gas flow hole;
a cover mounted on the holder so as to cover an opening of the gas flow hole on a side on which the gas is discharged; and
a gas discharge path formed between the cover and the holder and configured to discharge the gas discharged from the gas flow hole between the cover and the holder.

2. The gas permeable member according to claim 1, wherein
the cover includes a cover body formed so as to cover the opening of the gas flow hole on the side on which the gas is discharged, and
the cover body is arranged at a position away from the gas permeable sheet so that a space is formed between the cover body and the gas permeable sheet when the cover is mounted on the holder.

3. The gas permeable member according to claim 2, wherein
the cover further comprises a cover extending part extending from the cover body toward the holder side, and
the cover extending part is formed along the outer circumferential direction of the cover body so as to house an end of the holder having the opening on the side on which the gas is discharged within the space surrounded by the cover extending part.

4. A gas permeable container comprising:
the gas permeable member according to any one of claims 1 to 3; and
a container body on which the gas permeable member is mounted, wherein
the gas is allowed to flow between a space inside the container body and a space outside the container body via the gas permeable member.
